# FASCICULE DE BREVET EUROPEEN

(11) **EP 1 800 536 B1**
(45) Date de publication et mention de la délivrance du brevet: **10.11.2010**
(21) Numéro de dépôt: 06300870.0
(22) Date de dépôt: 09.08.2006
(51) Int. Cl.: A01K 1/00

(54) **Dispositif de contrôle d'une porte pour le bétail comportant une commande de fermeture automatique**
Türkontrolleinrichtung für Vieh mit automatischer Schliessvorrichtung
Devise for controlling an animal gate with an automatic closing command

(30) Priorité: 10.08.2005 FR 0508483
(43) Date de publication de la demande: 27.06.2007
(73) Titulaire: SAS SATENE, 36400 La Châtre (FR)
(72) Inventeur: Guillebaud, Jean-Luc, 23360, Lourdoueix Saint Pierre (FR)
(74) Mandataire: Rhein, Alain

(56) Documents cités:
- CA-A1- 2 448 349
- DE-A1- 1 810 034
- US-A- 4 813 379
- US-A- 5 463 984

## Description

La présente invention concerne le domaine technique se rapportant aux dispositifs de contrôle des portes pour le bétail. L'invention concerne notamment l'actionnement des portes, par exemple pour enclos, comportant un battant ou deux battants.

Les portes pour le bétail sont présentes dans différents appareils notamment dans des cages, des enclos ou des couloirs pour le bétail. Un problème dans le domaine des portes pour le bétail est de pouvoir contrôler le passage des animaux. Il s'agit d'empêcher l'animal de faire marche arrière au moment où l'animal passe la porte et de commander à un instant donné, la fermeture d'une cage, d'un couloir ou d'un enclos.

Il n'existe pas dans le domaine technique se rapportant aux dispositifs de contrôle des portes pour le bétail, de dispositif permettant de maintenir la porte dans une position ouverte dans l'attente d'un animal associée à une commande de fermeture automatique de la porte.

Il existe des portes utilisées pour nourrir ou séparer le bétail. Le brevet US 4, 813, 379 décrit un tel dispositif. Cependant le dispositif décrit dans le brevet US-4-813-379, ne comporte pas de commande de fermeture de la porte puisque la porte est ouverte par l'animal et se referme quand il est passé. D'autre part, dans ce dispositif, un verrouillage de la porte est prévu uniquement dans une position fermée. L'objet de ce brevet n'est donc pas de laisser la porte en position ouverte dans l'attente d'un animal, puisque la porte est ouverte par l'animal lui-même.

Il existe également des portes pour le bétail ne laissant passer les animaux que dans un sens afin d'empêcher le retour de l'animal. Le brevet US-5-463-984 décrit un tel dispositif. Cependant le dispositif décrit dans le brevet US-5-463-984 ne permet pas de commander la fermeture de la porte à un instant voulu, ni de garder la porte en position ouverte dans l'attente d'un animal.

CA-A-2 448 349 décrit un dispositif de contrôle d'une porte fermant un passage selon le préambule de la revendication 1c.

La présente invention a donc pour objet de pallier un ou plusieurs des inconvénients de l'art antérieur en créant un dispositif de contrôle d'une porte pour le bétail permettant de maintenir la porte dans une position ouverte dans l'attente d'un animal et de commander la fermeture de la porte.

Cet objectif est atteint par un dispositif de contrôle d'une porte fermant un passage ou l'ouverture d'un enclos pour du bétail, la porte comportant un bâti relié au passage ou à l'enclos et au moins un battant, le ou les battants permettant de fermer la porte, chaque battant pivotant selon un axe vertical par rapport au bâti, caractérisé en ce qu'il comporte au moins :
- des moyens d'entraînement du ou des battants en rotation, comprenant au moins un moyen moteur tendant à fermer automatiquement la porte.
- des moyens de retenue des moyens d'entraînement lorsque les moyens d'entraînement se trouvent dans une position ouverte déterminée telle que le ou les battants se trouvent dans une position ouverte déterminée,
- une commande de fermeture agissant sur les moyens de retenue, permettant d'annuler pendant une durée déterminée, la retenue des moyens d'entraînement et de réaliser la fermeture.
- des moyens manuels d'ouverture agissant sur les moyens d'entraînement pour placer les moyens d'entraînement dans la position ouverte déterminée.

Selon une autre particularité, les moyens d'entraînement comprennent un levier d'entraînement lié de façon articulé aux battants, le levier d'entraînement comprenant un grand et un petit bras de levier de chaque côté d'une liaison pivot du levier avec le bâti, le grand bras de levier étant lié par un appui plan avec le bâti et glissant sur le bâti selon un parcours entre la position ouverte déterminée et la position fermée.

Selon une autre particularité, les moyens moteurs comprennent un piston à gaz coulissant dans un cylindre à gaz et une tige motrice liée au piston, le cylindre à gaz étant en liaison pivot avec le bâti, la tige motrice étant en liaison pivot avec l'extrémité du petit bras de levier et exerçant une pression en permanence sur l'extrémité, entraînant le levier dans le sens de sa position ouverte vers sa position fermée.

Selon une autre particularité, les moyens de retenue comprennent une première butée escamotable, en liaison pivot avec le bâti, ayant dans une position saillante, un côté de blocage vers le ou les battants, le côté de blocage étant situé contre le levier d'entraînement lorsque les moyens d'entraînement sont dans la position ouverte déterminée, la butée se plaçant en position escamotée par rapport au levier, par un appui sur un côté saillant en pente.

Selon une autre particularité, la commande de fermeture comprend une came, en liaison pivot avec le bâti, située à la verticale du levier d'entraînement, lorsque les moyens d'entraînement sont dans la position ouverte déterminée, et la came, lorsqu'elle est actionnée, soulevant le levier d'entraînement au dessus de la première butée escamotable se trouvant dans sa position saillante.

Un deuxième objectif est de réaliser la fermeture automatique d'une porte fermant un passage pour du bétail tout en réalisant un blocage du mouvement de retour s'effectuant au fur et à mesure de la fermeture de la porte jusqu'à la position fermée. Le blocage du mouvement de retour a pour avantage d'empêcher l'animal de faire marche arrière.

Selon une autre particularité, le dispositif de contrôle comprend des moyens d'empêchement automatique du mouvement de retour des moyens d'entraînement, dans le mouvement des moyens d'entraînement entre la position ouverte déterminée vers la position fermée.

Selon une autre particularité, les moyens d'empêchement du mouvement de retour comprennent une pluralité de butées escamotables, de la deuxième à la dernière butée, situées après la première butée sur le parcours du levier dans son mouvement de fermeture, présentant dans leur position saillante, un côté de blocage à l'opposé du ou des battants, la dernière butée ayant son côté de blocage contre le levier en position fermée, les butées se plaçant en position escamotée par rapport au levier, par un appui sur un côté saillant en pente.

Selon une autre particularité, la commande d'autorisation d'ouverture comprend un rail de soulèvement escamotable, le rail étant situé à la verticale des butées escamotables, de la deuxième à la dernière butée, le bord supérieur du rail de soulèvement, dans sa position haute, étant à une hauteur déterminée au-dessus des butées escamotables dans leur position saillante.

Selon une autre particularité, la commande d'autorisation d'ouverture comprend une poignée d'autorisation d'ouverture, la poignée entraînant en rotation un tube lié par une liaison pivot avec le bâti, le rail de soulèvement étant lié au tube et excentré de l'axe de rotation du tube, une rotation entre deux positions déterminées, plaçant le rail de soulèvement soit en position escamotée, soit en position haute, la poignée d'autorisation d'ouverture étant accessible en même temps qu'au moins un battant.

Un troisième objectif est de commander la fermeture de la porte en restant à distance de l'appareil sur lequel se trouve la porte contrôlée par le dispositif de contrôle.

Selon une autre particularité, la came est activée à distance.

Selon une autre particularité, la commande de fermeture comprend un lien souple fixé à la came, débouchant par un tube creux coudé ayant une ouverture basse dirigée vers le bas, débouchant à l'autre extrémité du tube par une ouverture haute dirigée horizontalement, l'extrémité du lien débouchant par l'ouverture basse du tube étant liée à la came, l'extrémité du lien débouchant par l'ouverture haute du tube étant tenue par un utilisateur et le tube étant lié au bâti par une liaison pivot d'axe vertical dont le centre 25 passe par le centre de l'ouverture basse, un moyen de fixation permettant de bloquer la liaison pivot.

Selon une autre particularité, la commande de fermeture comprend un lien fixé par une première extrémité à la came, l'autre extrémité du lien étant fixé à une tige liée à un piston coulissant dans un cylindre, le mouvement du piston dans le cylindre étant commandé électriquement à distance, l'activation de la commande provoquant une traction du lien de façon provoquer une rotation de la came entraînant son activation.

Selon une autre particularité, la commande de fermeture comprend un lien fixé par une première extrémité à la came, l'autre extrémité du lien étant lié à une bascule se trouvant dans le bas du passage, la bascule tirant sur le lien afin d'activer la came, après que l'animal soit passé.

Selon une autre particularité, le dispositif de contrôle est adapté sur la porte 0, 3 d'une cage ou d'un couloir ou d'un enclos.

Selon une autre particularité, une cage comporte une mangeoire accessible depuis l'intérieur de la cage.

D'autres particularités et avantages de la présente invention apparaîtront plus clairement à la lecture de la description ci-après, faite en référence aux dessins annexés, dans lesquels :
- les figures 1 et 2 représentent le dispositif de contrôle d'une porte installé sur une cage, respectivement en vue de face et en vue de dessus;
- les figures 3 à 5 représentent la partie du dispositif de contrôle permettant le blocage du mouvement de retour, en vue de gauche, par rapport à la figure 1;
- les figures 6 et 7 représentent la partie du dispositif de contrôle permettant le déblocage du système afin d'effectuer un mouvement de retour, en vue de gauche, par rapport à la figure 1 ;
- les figures 8 et 9 représentent le dispositif de contrôle d'une porte adapté sur un couloir fixe, respectivement en vue de face et en vue de dessus ;
- les figures 10 et 11 représentent le dispositif de contrôle d'une porte adapté sur un couloir de contention, respectivement en vue de face et en vue de dessus ;
- les figures 12, 13 et 14 représentent le dispositif de contrôle d'une porte installé sur la porte d'un enclos, respectivement en vue de face, en vue de dessus et en vue de dessus inséré dans la paroi d'un enclos ;
- les figures 15 et 16 représentent le dispositif de contrôle d'une porte à un seul battant s'ouvrant sur la droite, respectivement en vue de face et en vue de dessus ;
- les figures 17 et 18 représentent le dispositif de contrôle d'une porte à un seul battant s'ouvrant sur la gauche, respectivement en vue de face et en vue de dessus ;
- La figure 19 représente une butée escamotable ;
- La figure 20 représente une came et une butée ;
- La figure 21 représente un rail de soulèvement.

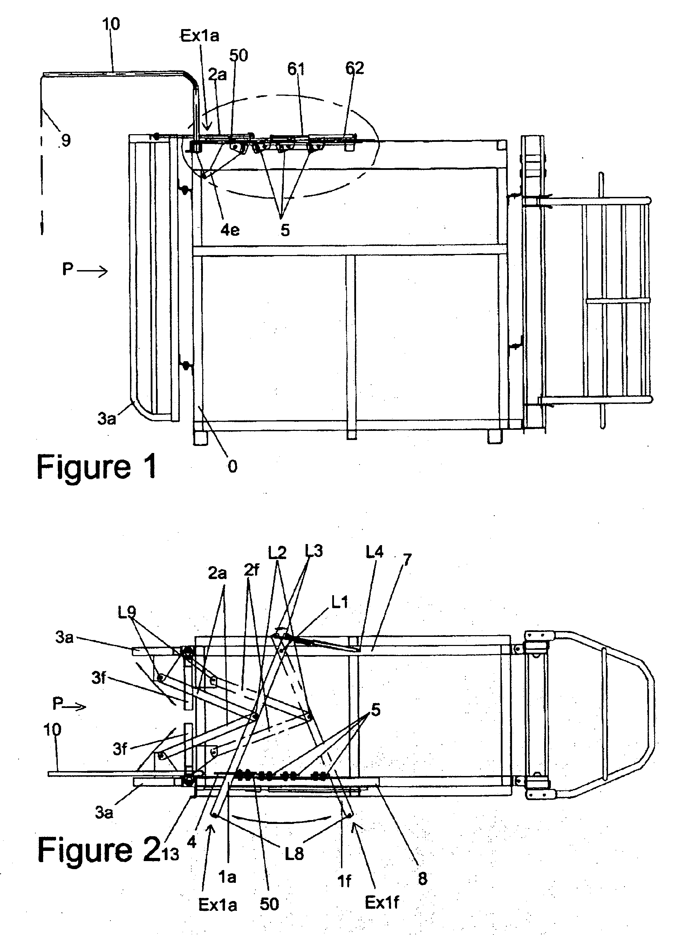

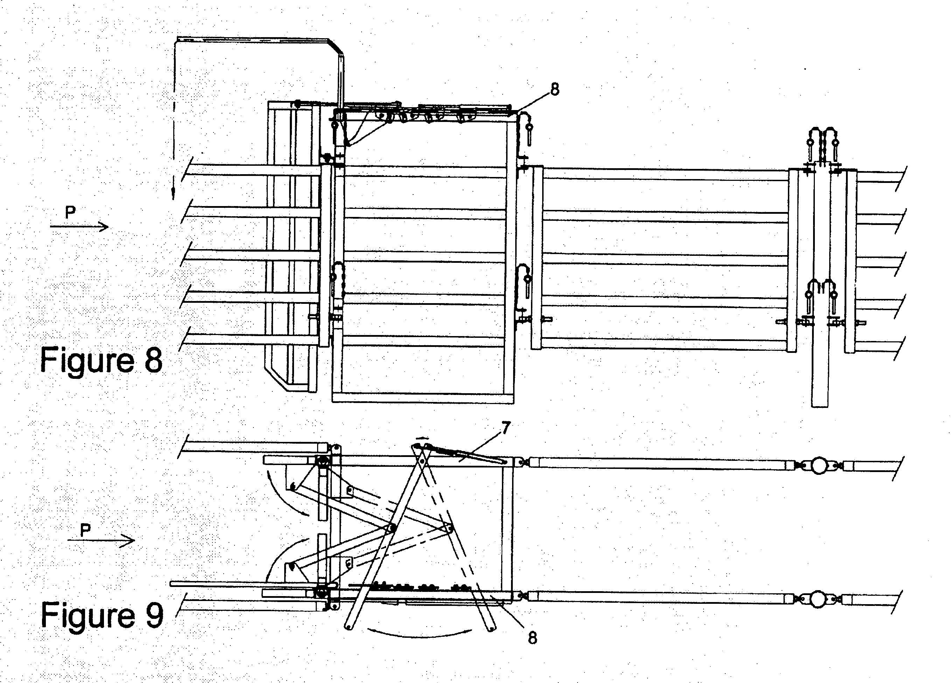

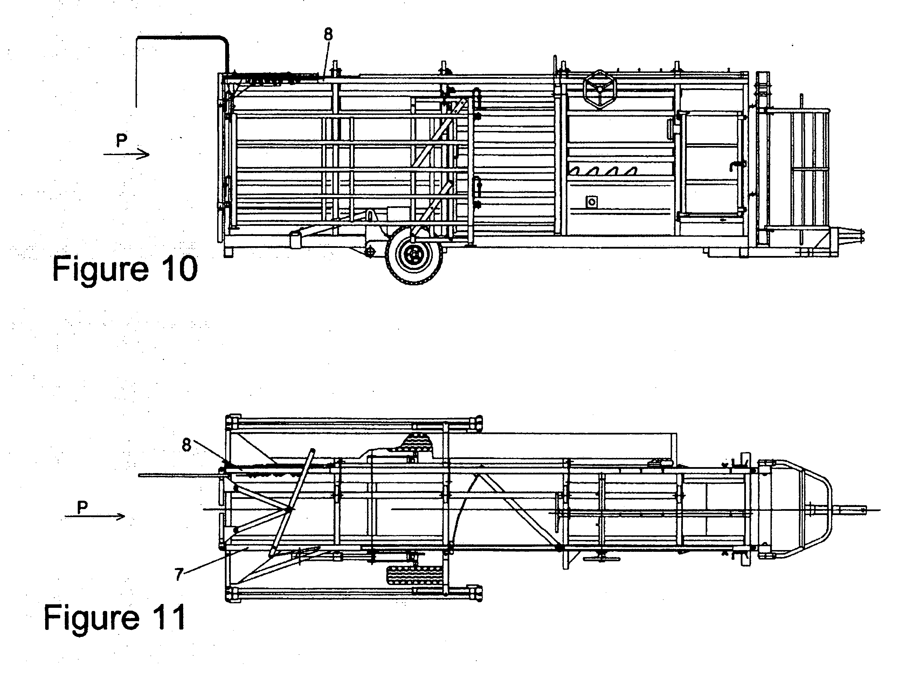

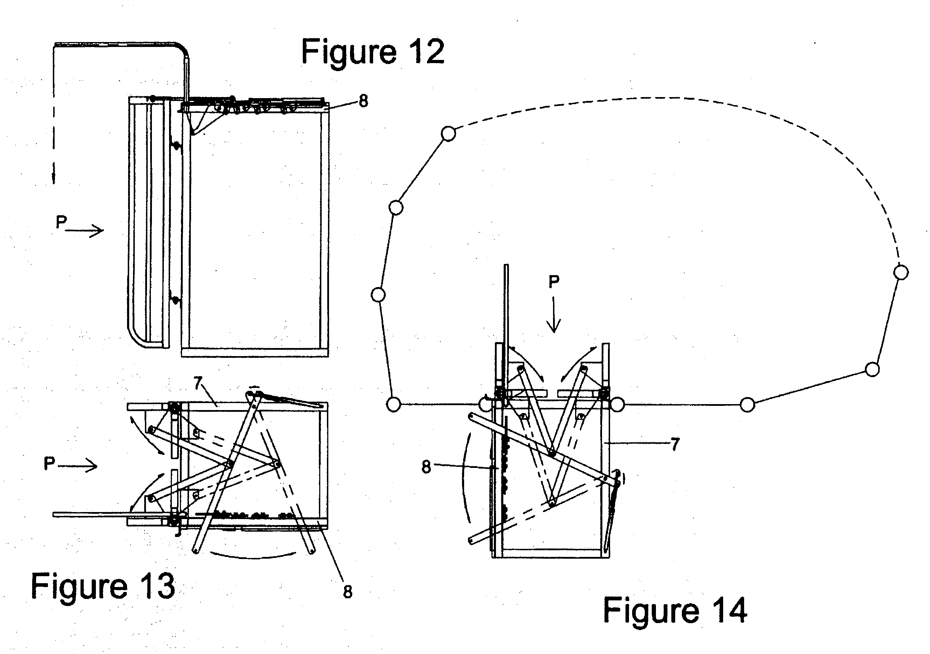

Le dispositif selon l'invention va maintenant être décrit en références aux figures 1 à 21. Le dispositif de contrôle d'une porte s'adapte sur plusieurs appareils pour le bétail. Les figures 1 et 2 donnent un exemple de dispositif de contrôle selon l'invention s'adaptant sur la porte d'une cage. Les figures 8 et 9, donnent un exemple de dispositif de contrôle selon l'invention s'adaptant sur la porte d'un couloir fixe. Les figures 10 et 11 donnent un exemple de dispositif de contrôle s'adaptant sur la porte d'un couloir de contention. Les figures 12 à 14 donnent un exemple d'adaptation du dispositif de contrôle sur la porte d'un enclos. Le dispositif selon l'invention permet de contrôler l'ouverture et la fermeture d'une porte fermant un passage 4 pour le bétail. Le passage P pour le bétail est une ouverture, de manière non limitative, dans une cage ou un enclos ou est une extrémité d'un couloir, pour le bétail. Une porte ferme un passage P pour le bétail par un ou deux battants 3f en liaison pivot d'axe vertical, avec le bâti 0 de la porte. La liaison pivot d'axe vertical entre les battants 3 et le bâti 0 de la porte fait partie de l'art antérieur et ne sera pas décrite. Dans la description qui suit, un indice suivi de la lettre « a » ou respectivement de la lettre « f» signifiera que la pièce est dans sa position ouverte d'attente ou respectivement dans sa position fermée.

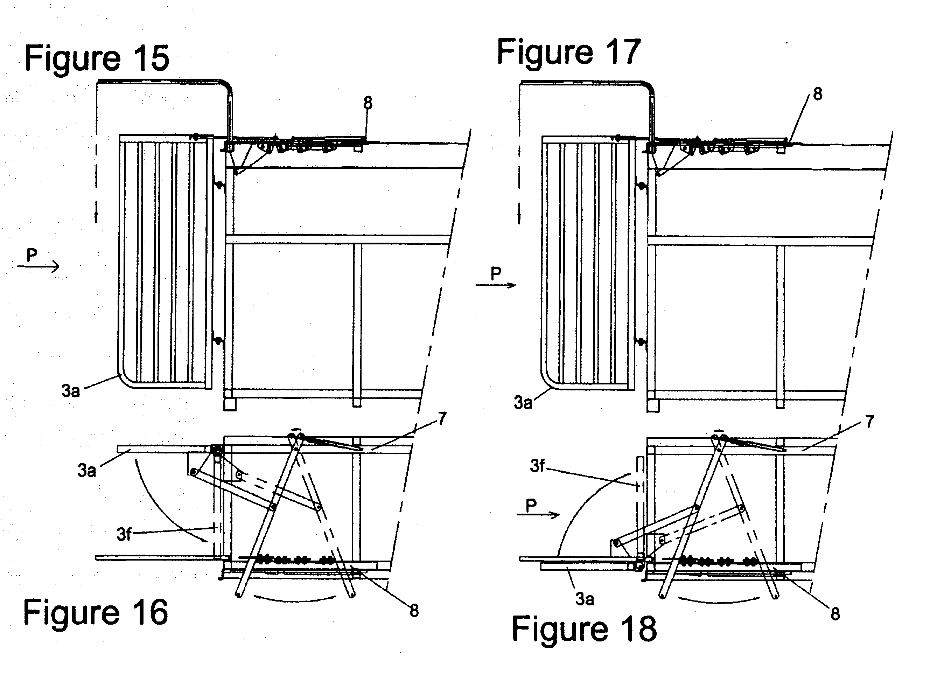

Les portes pour le bétail sont composées d'un ou deux battants 3. Dans un exemple non limitatif, représenté aux figures 1 et 2, une cage comporte une porte à deux battants 3. Chacun des deux battants couvre toute la hauteur de l'ouverture de la cage et la moitié de sa largeur. Les deux battants 3 sont liés chacun à un bord 0 opposé de l'ouverture P et sont articulés par rapport au bâti 0 de la porte. Dans un autre exemple non limitatif, représenté aux figures 15 à 18 la porte d'enclos ne comprend qu'un seul battant 3. Dans le cas où la porte ne comprend qu'un seul battant 3, le battant 3 peut s'ouvrir indifféremment sur la droite, comme sur la figure 16, ou sur la gauche comme sur la figure 18. Dans le cas d'une porte à deux battants 3 comme représenté aux figures 1 et 2 et aux figures 8 à 14, le dispositif de contrôle selon l'invention comporte deux bras 2 d'entraînement reliés chacun à un battant 3 de la porte. La position d'un battant 3 est contrôlée par un seul bras 2. Le dispositif de contrôle selon l'invention comprend donc un bras 2 par battant 3. Un battant 3 est relié à un bras 2, de manière connue, par une liaison pivot. Le déplacement d'un bras 2 provoque le pivotement d'un battant 3, commandant sont ouverture 3a ou sa fermeture 3f. La liaison pivot entre le bras 2 et le battant 3 permet un mouvement relatif angulaire du bras 2 par rapport au battant 3.

Le bras 2 d'entraînement possède deux points de liaison : un point, précédemment cité, en liaison avec un battant 3 et un deuxième point en liaison avec un levier 1 d'entraînement. Le levier 1 d'entraînement est lié aux bras 2, par une liaison L2 pivot, permettant un mouvement relatif angulaire par rapport aux bras 2. Dans le cas d'une porte à deux battants 3 les deux bras 2 sont liés ensembles par une même liaison L2 pivot avec le levier 1 d'entraînement. Dans le cas d'une porte à un battant 3, comme représenté aux figures 15 à 18, un seul bras 2 d'entraînement est relié de la même façon au battant 3 et au levier 1 d'entraînement. Afin de ne pas gêner le passage du bétail, le bras 2 d'entraînement du battant 3 est accroché sur la partie supérieure du battant 3, au dessus de l'espace nécessaire pour le passage d'un animal.

Le levier 1 d'entraînement se trouve également au dessus de l'espace nécessaire au passage du bétail. Le levier 1 d'entraînement représenté au figures 1 à 18, est le même, que le dispositif de contrôle ait un ou deux bras 2 d'entraînement de battant 3. Le levier 1 d'entraînement exerce une traction sur le ou les bras 2, lors de la fermeture de la porte, ou une poussée lors de l'ouverture de la porte. Le levier 1 d'entraînement est lié au bâti 0, de manière connue, par une liaison L1 pivot. La liaison L1 pivot est réalisée sur une barre 7 de fixation horizontale située à la verticale d'une paroi du passage P. Le levier 1 a d'autre part, une surface d'appui avec une barre 8 d'appui horizontale située à la verticale de la paroi opposée du passage P. Le levier 1 traverse donc toute la largeur du passage P.

Dans l'exemple non limitatif de la cage représentée aux figures 1 et 2, les barres de fixation 7 et d'appui 8 sont les barres délimitant le haut des parois latérales de la cage. Dans l'exemple non limitatif du couloir de contention, représenté aux figures 10 et 11, les barres de fixation 7 et d'appui 8 sont des barres délimitant le haut des parois latérales du couloir de contention. Dans les exemples non limitatif du couloir fixe, figures 8 et 9, et de l'enclos, figures 12 à 14, le passage comporte une structure plus élevée que les parois du couloir ou de l'enclos, sur laquelle se trouvent les barres de fixation 7 et d'appui 8.

Le levier 1 d'entraînement comprend deux bras de levier positionnés de chaque côté de sa liaison L1 pivot avec le bâti 0, qui sont un grand bras de levier 1 et un petit bras de levier 1. Le petit bras de levier 1 va du pivot L1 vers l'extérieur du passage P. Le grand bras de levier 1 va vers l'intérieur du passage P et couvre toute la largeur du passage pour le bétail en dépassant au-delà de la barre 8 d'appui. Le grand bras de levier 1 repose donc sur la barre 8 d'appui. L'extrémité du petit bras de levier 1 est liée, de manière connue, par une liaison L3 pivot, à un organe 61, 62 moteur. La liaison L3 pivot permet un mouvement angulaire relatif de l'organe 61, 62 moteur par rapport au levier 1 d'entraînement. L'extrémité du grand bras de levier 1 est liée de manière connue en liaison L8 pivot, avec une poignée réalisée de manière non limitative par un tube vertical.

Dans l'exemple non limitatif l'organe 61, 62 moteur comprend un cylindre 62 dans lequel coulisse un piston à gaz lié à une tige 61 de commande. Le cylindre 62 à gaz est lié au bâti 7, 0 par une liaison L4 pivot. Dans un autre mode de réalisation, l'organe moteur est un cylindre et un piston à ressort. L'extrémité du cylindre 62 est en liaison L4 pivot, avec la barre 7 de fixation sur laquelle est réalisée la liaison L1 pivot du levier 1 d'entraînement. L'organe 61, 62 moteur exerce, de manière non limitative, une force de poussée sur l'extrémité du petit bras de levier 1, l'organe 61, 62 moteur étant en appui sur le bâti 0. Dans un autre exemple de réalisation, non représenté, un ressort, exerçant une force de traction, lié au petit bras de levier 1 à l'opposé du piston, permet un mouvement du levier 1 en rotation, dans le même sens que dans le cas où une force de poussée est exercée par cylindre 62 dans lequel coulisse un piston lié à une tige 61 de commande. Une extrémité du ressort est liée au bâti 0 et l'autre extrémité est liée au bout du petit bras de levier 1.

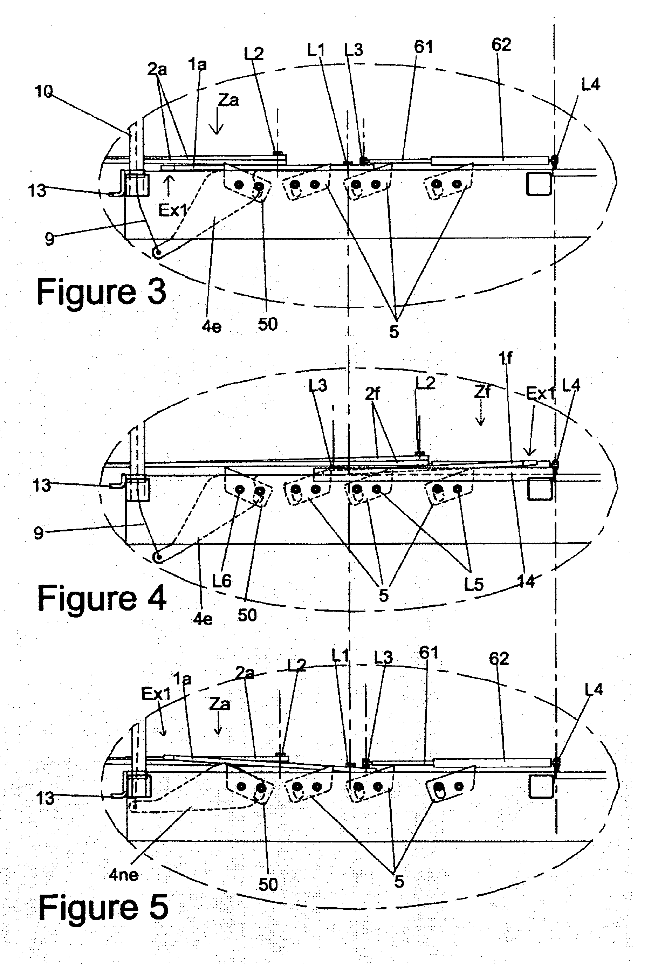

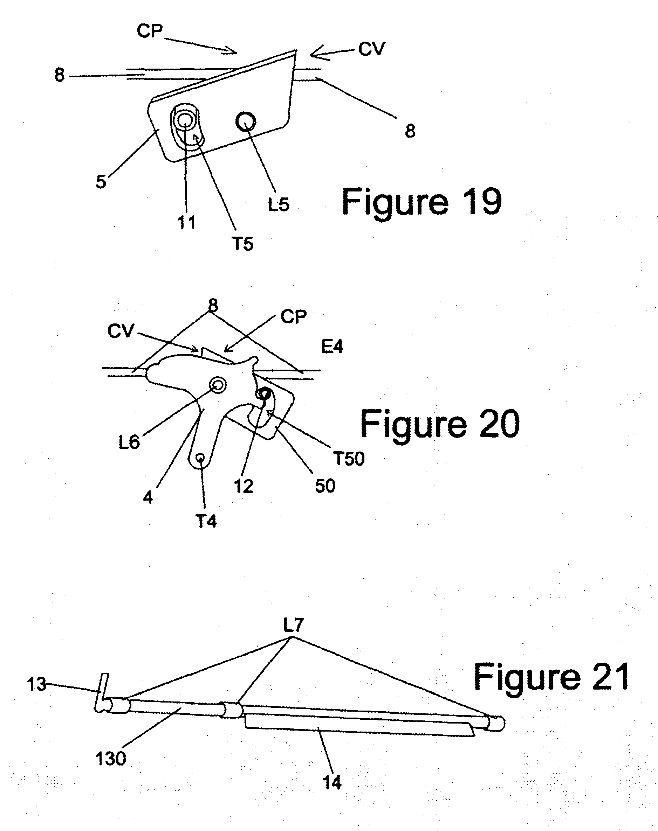

Des butées 5, 50 escamotables, représentées aux figures 3 à 5, sont liées à la barre 8 d'appui. D'autre part, les butées 5, 50 sont détaillées sur les figures 19 et 20. Les butées 5, 50 sont des pièces plates trapézoïdales, dont les côtés parallèles sont allongés et placées dans un plan vertical. Chaque butée 5, 50 escamotable est liée est en liaison L5, L6 pivot à la barre 8 d'appui. D'autre part elle comprend un trou 5T, T50 de limitation, de largeur déterminée, traversé par un élément 11, 12 saillant lié au bâti 8. La forme du trou 5T, T50 de limitation suit un arc de cercle dont le centre appartient à l'axe de rotation de la liaison L5, L6 pivot. Ainsi le mouvement de rotation des butées 5, 50 s'effectue entre deux positions qui correspondent à l'appui de l'élément 11, 12 saillant aux extrémités du trou 5T, T50. D'autre part, le centre de la liaison pivot L5, L6 est décalé latéralement par rapport au centre de gravité de la pièce 5, 50. Le poids de la butée 5, 50 la maintient donc dans une position donnée lorsqu'elle est laissée libre en rotation sur le bâti 0, 8. En position de repos, la butée 5, 50 dépasse en hauteur de la barre 8 d'appui et présente par le haut un côté CP en pente et un côté CV vertical de blocage. L'appui sur le côté CP en pente provoque le basculement de la butée 5, 50, positionnant la butée 5, 50 à plat, en dessous du niveau de la barre 8 d'appui. La position horizontale est la position escamotée d'une butée 5, 50. Le côté CV vertical bloque une pièce en appui, puisque l'élément 11, 12 saillant lié au bâti 0, 8 est déjà en butée dans le trou T5 de limitation. Le côté CV vertical est le côté de blocage. Les butées 5 sont situées entre une première butée 50 qui est la plus proche des battants 3 et une dernière butée 5 qui est la plus éloignée. La première butée 50 présente son côté CV de blocage vers les battants 3, tandis que les autres butées 5 présentent leur côté CV de blocage dans l'autre sens. La liaison L5, L6 pivot des butées 5, 50 est silencieuse, la réalisation de liaisons silencieuses étant connue de l'art antérieur.

Le dispositif de contrôle selon l'invention comprend une came 4 plate de commande de la fermeture, placée dans un plan verticale et en liaison L6 pivot sur la barre 8 d'appui. La came 4 est également limitée en rotation par un espace E4 de limitation délimité par deux butées, traversé par un élément 12 saillant. La came a deux positions limites correspondant aux positions de butée de l'élément 12 saillant dans l'espace E4 de limitation. L'axe de rotation de la came 4 est décalé latéralement afin d'avoir une position de repos, avec un retour en position de repos du au poids de la came 4. La position 4e de repos est la position escamotée. Dans sa deuxième position 4ne limite, la came 4ne dépasse au dessus du niveau de la première butée 50 escamotable. La deuxième position est la position 4ne activée de la came 4. La came 4 est située à la verticale de la première butée 50. La came comporte un trou T4 par lequel est reliée une ficelle 9. La ficelle 9 débouche d'un tube 10 creux par une ouverture inférieure orientée vers le bas. La ficelle 9 débouche à l'autre extrémité du tube 10 par une ouverture supérieure orientée selon une direction horizontale. Le tube 10 est coudé à 90°. Le tube 10 est lié au bâti de façon à pouvoir pivoter selon un axe vertical passant par la partie vertical du tube. De façon connue, le tube 10 est bloqué dans une position, par exemple par une vis. La ficelle 9 sort du tube par son extrémité supérieure et est tenue à son extrémité par un opérateur. Dans un mode de réalisation, le tube 10 coudé est orienté vers l'arrière, de façon à ce que l'opérateur ne soit pas vu de l'animal. Dans un autre mode de réalisation, une longue ficelle 9 permet à l'opérateur d'être loin du passage, étant ainsi caché de l'animal au moment de son passage par la porte. La came 4 au repos est située sous le bord supérieur de la barre 8 d'appui. Lorsque la came 4 est actionnée, par une traction de la ficelle 9, la came 4ne dépasse au dessus de la première butée 50, dans sa position de repos.

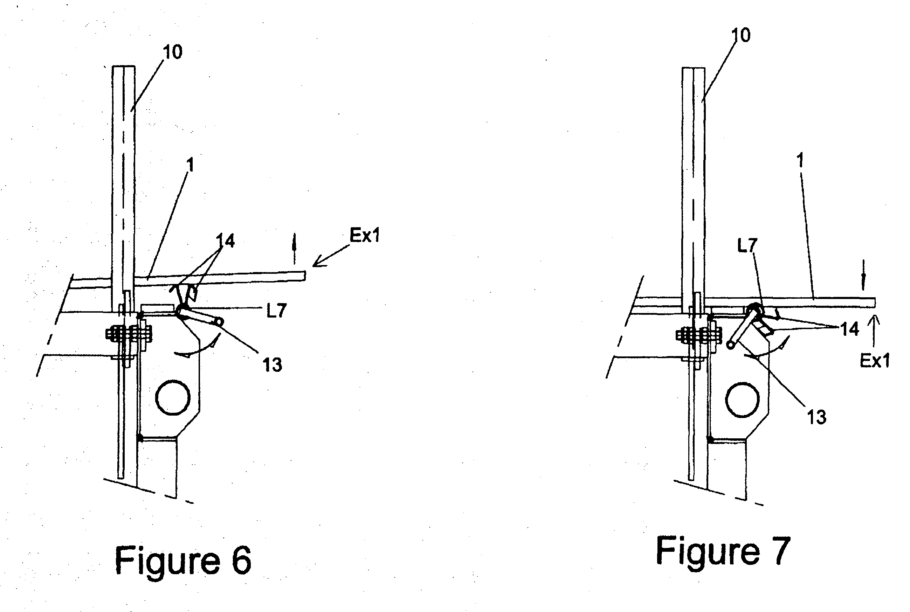

Le dispositif comporte un rail 14 de soulèvement, comme représenté aux figures 6 et 7. D'autre part, un exemple de réalisation du rail est détaillé à la figure 21. Le rail 14 de soulèvement est lié à un tube 130 lié par une liaison L7 pivot au rapport au bâti 8, 0. Le tube 130 est commandé en rotation par une poignée 13. La poignée 13 est située du même côté que les battants 3. Le rail 14 pivote à 90° entre une position escamotée, comme représenté à la figure 7, et une position de soulèvement, comme représenté à la figure 6. Dans la position escamotée, comme représenté à la figure 7, le rail 14 est situé à une hauteur inférieure à celle du bord supérieur de la barre 8 d'appui. Dans la position de soulèvement, comme représenté à la figure 6, le rail 14 est situé à une hauteur supérieure à celle des butées 5 escamotables au repos. Le rail 14 de soulèvement est situé à la verticale des butées 5 allant de la deuxième à la dernière butée.

Un exemple de fonctionnement du dispositif va maintenant être décrit. Lorsque la porte est ouverte dans l'attente d'un animal, les battants 3a sont dans une position ouverte. Les bras 2a sont donc dans une position avancée. Le levier la d'entraînement est également dans une position avancée. Le levier la d'entraînement est bloqué par la première butée 50 qui lui présente son côté CV vertical. La figure 3 représente le levier la bloqué au niveau d'une zone d'appui Za, par la première butée 50. L'extrémité Exl du levier est indiquée par un symbole. Une poignée, non représentée, peut par exemple être fixée à l'extrémité du levier 1. L'élément moteur 61, 62 exerçant une poussée sur le levier 1 d'entraînement, le levier la est donc bloqué en appui contre le déclenchement de la fermeture des portes est réalisé, de manière non limitative par la traction de l'utilisateur sur la ficelle 9. Ce type de déclenchement a pour avantage de pouvoir être réalisé à distance. Ainsi un opérateur pourra se trouver loin du passage pour le bétail tout en déclenchant sa fermeture. Le mouvement de rotation du tube 10 creux par rapport au bâti, permet une traction dans plusieurs directions possibles, c'est-à-dire que l'utilisateur actionne la commande de fermeture en des positions tout autour du passage pour le bétail. La ficelle guidée dans le tube 10 creux exerce une force de traction vers le haut, sur la came 4. La came 4 effectue alors une rotation et va émerger au dessus de la barre 8 d'appui sur laquelle repose le levier la. Le levier la situé à la verticale de la came 4 est donc soulevé. Lorsque le levier la passe au dessus de la première butée 50, la force exercée par l'élément moteur le fait pivoter. La figure 5 représente l'instant où le levier la passe au dessus de la première butée 50. La zone d'appui Za sur la première butée se trouve au-dessus de la première butée 50, juste avant le déplacement en rotation du levier 1.

L'extrémité Exl du grand bras de levier 1 se déplace sous l'action de l'élément moteur, en s'éloignant des battants 3. Le grand bras de levier 1, dans son mouvement d'éloignement, tire les bras 2 d'entraînement reliés aux battants 3. Les battants 3 pivotent, fermant la porte. Lors de son passage, le grand bras de levier 1 rencontre le côté CP en pente des butées 5 escamotables, de la deuxième à la dernière butée. Le grand bras de levier 1 fait donc basculer les butées 5. Une fois que le levier 1 est passé sur une butée 5, la butée 5 revient en position de repos sous l'action de son poids. La butée 5 présente donc son côté CV vertical au levier, après son passage. Dans le cas où le mouvement du levier 1 est inversé, par une traction des bras 2, due à un mouvement d'ouverture des battants 3, le grand bras de levier 1 est arrêté contre le côté CV vertical de blocage de la dernière butée 5 passée. La butée 5 escamotable ne permet ainsi le passage du grand bras de levier 1 contre la barre 8 d'appui, que dans un seul sens. Chaque butée 5 escamotable empêche le mouvement de retour à partir de son côté CV vertical. La dernière butée 5 escamotable constitue un moyen de blocage en position fermée. Le blocage progressif de la fermeture des battants 3 a pour avantage de ne pas laisser à l'animal la sensation qu'il peut s'échapper. Le déblocage est réalisé par le soulèvement du grand bras de levier 1 à une hauteur déterminée, au-dessus des butées 5 escamotables. Un pivotement de la poignée 13 liée au tube 130 en liaison pivot L7 par rapport au bâti 8, 0 provoque le soulèvement du rail 14. L'élévation du rail 14 de soulèvement, situé à la verticale des butées 5 escamotables, provoque donc l'élévation du levier 1 d'entraînement au-dessus des butées 5 dans leur position de repos, de la deuxième à la dernière butée. La figure 4 représente le soulèvement du grand bras de levier 1 au-dessus de sa position de fermeture. Un repère Zf indique la zone d'appui du levier 1 contre la barre d'appui en position fermée. Le mouvement de retour du levier 1 d'entraînement n'est donc plus empêché par les butées 5. Cependant l'élément 61, 62 moteur exerce une force qui maintient les battants 3f fermés, même si cette force n'est pas suffisante pour résister à une forte poussée sur les battants 3 exercée par un animal. L'utilisateur ouvre alors la porte en tirant, par exemple, sur une poignée située à l'extrémité Ex1 du grand bras de levier ou en tirant directement sur les battants. La poignée 13 activant le rail est située à proximité des battants 3 afin que l'utilisateur puisse lever le rail 14 de soulèvement en contrôlant les battants 3. L'utilisateur exerce un couple de forces sur le levier 1, dont le moment est supérieur au couple exercé par l'élément 61, 62 moteur d'autant plus que le point Ex1, L2 d'application de la force d'ouverture des battants est plus éloigné du centre de rotation du levier 1. Dans l'exemple non limitatif représenté à la figure 2, le point d'application à l'extrémité Ex1 du levier, est situé à une distance d'environ neuf fois celle de la distance du point d'application de la force de l'élément moteur, par rapport à l'axe L1 de rotation. Lorsque l'utilisateur tire sur les battants, le point d'attache des bras 2 sur le levier 1 à une distance d'environ cinq fois celle du point d'application de la force motrice, par rapport à l'axe du pivot L1. L'utilisateur n'a donc aucun mal à contrer la force exercée par l'élément 61, 62 moteur et à ramener la porte dans l'état uvert initial. Le blocage du levier 1 est réalisé par la première butée 50 qui est orientée en sens inverse des autres butées. Le rail 14 de soulèvement est en effet décalé de la première butée 50 et ne se trouve pas à la verticale de la première butée 50.

De façon connue, certaines liaisons L1, L2, L3, L4, L9 pivot sont réalisées avec un jeu fonctionnel, pour permettre un éloignement du plan de rotation, notamment les liaisons L9 entre les battants 3 et les barres 2 d'entraînement, L2 entre les barres 2 d'entraînement et le levier 1, L1 entre le levier 1 et le bâti 7, L3 entre le levier 1 et l'élément 61 moteur et L4 entre l'élément 62 moteur et le bâti 7. Ces différentes pièces sont liées par une liaison pivot et la liaison subit en même temps un décalage vertical. Ce décalage vertical nécessite une souplesse dans la liaison pivot. Le levier 1 est, par exemple, soulevé au niveau du rail 14 de soulèvement, ce qui implique un jeu fonctionnel de la liaison pivot L1 du levier 1 avec le bâti 7. De même le soulèvement du levier 1 provoque un décalage vertical des liaisons pivots L2, L3 avec les bras d'entraînement et avec l'élément moteur.

D'autres exemples de réalisation vont maintenant être décrits. Dans un autre mode de réalisation non représenté, le levier 1 entraîne en translation une crémaillère roulant sur une roue dentée, la roue dentée étant en rotation par rapport au bâti 0. La roue dentée bloquée selon un sens de rotation, n'autorise la translation que dans une seule direction, de la même façon que les butées 5 escamotables, de la deuxième à la dernière butée. Un soulèvement de la crémaillère au dessus de la roue dentée, permet alors un retour du dispositif en position ouverte. Le système 4, 50 de retenue en position ouverte, précédemment décrit, pourra, par exemple être conservé.

Dans un autre mode de réalisation, non représenté, un moteur commandé de manière non limitative par un bouton poussoir ou par une commande à distance, comprend un axe relié à un disque, la ficelle 9 étant rattachée à une extrémité du disque. La rotation du moteur entraîne une traction de la ficelle 9. Un moyen de limitation en rotation du moteur permet de le déplacer entre deux positions extrêmes. Une position correspondant à une traction et l'autre à un relâchement. De manière non limitative, lors du relâchement de la ficelle 9, une commande inverse du moteur relâche la ficelle 9 ou le poids de la came 4 entraîne ce mouvement inverse. Une traction entraîne une activation de la came 4.

Dans un autre mode de réalisation, non représenté, une bascule incorporée, de manière connue, dans le plancher après le passage pour le bétail, actionne la ficelle tirant sur la came. Ce mode de réalisation permet de déclencher la fermeture de la porte dès que l'animal a passé la porte, sans l'intervention de l'homme.

Dans d'autres modes de réalisation, la ficelle est remplacée par un lien souple de manière non limitative en nylon ou en métal ou par un lien rigide dans les systèmes d'activation de la came par exemple par un moteur ou par une bascule.

Dans un autre mode de réalisation, non représenté, un vérin commandé électriquement pousse un deuxième rail de soulèvement qui déplace le levier 1 en hauteur, remplaçant ainsi la came 4. Une commande inverse ramène alors le deuxième rail de soulèvement dans une position escamotée.

Dans un autre mode de réalisation, non représenté, la force motrice du mouvement de fermeture est exercée, de manière connue, par un ressort exerçant un effort directement sur les battants 3 et tendant à fermer les battants 3.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de contrôle d'une porte fermant un passage (P) ou l'ouverture (P) d'un enclos pour du bétail, la porte comportant un bâti (0) relié au passage ou à l'enclos et au moins un battant (3), le ou les battants (3) permettant de fermer la porte, chaque battant (3) pivotant selon un axe vertical par rapport au bâti (0), **caractérisé en ce qu'**il comporte au moins :
- des moyens d'entraînement (1, 2, 61, 62) du ou des battants (3) en rotation, comprenant au moins un moyen (61, 62) moteur tendant à fermer automatiquement la porte.
- des moyens de retenue (50, L6) des moyens d'entraînement (1, 2, 61, 62) lorsque les moyens d'entraînement (1, 2, 61, 62) se trouvent dans une position (1a, 2a) ouverte déterminée telle que le ou les battants (3a) se trouvent dans une position ouverte déterminée,
- une commande (4, 9, 10) de fermeture agissant sur les moyens de retenue (50), permettant d'annuler pendant une durée déterminée, la retenue des moyens (1, 2, 61, 62) d'entraînement et de réaliser la fermeture.
- des moyens (Ex1) manuels d'ouverture agissant sur les moyens (1, 2, 61, 62) d'entraînement pour placer les moyens d'entraînement dans la position ouverte déterminée.

2. Dispositif selon la revendication 1, **caractérisé en ce que** les moyens d'entraînement comprennent un levier (1) d'entraînement lié de façon articulée aux battants (3), le levier (1) d'entraînement comprenant un grand et un petit bras de levier de chaque côté d'une liaison (L1) pivot du levier (1) avec le bâti (0, 7), le grand bras de levier (1) étant lié par un appui (Za) plan avec le bâti (0, 8) et glissant sur le bâti (0, 8) selon un parcours entre la position (1a) ouverte déterminée et la position (1f) fermée.

3. Dispositif selon les revendications 1 et 2, **caractérisé en ce que** les moyens (61, 62) moteurs comprennent un piston à gaz coulissant dans un cylindre (62) à gaz et une tige (61) motrice liée au piston, le cylindre (62) à gaz étant en liaison (L4) pivot avec le bâti (0, 0), la tige (61) motrice étant en liaison (L3) pivot avec l'extrémité du petit bras de levier (1) et exerçant une pression en permanence sur l'extrémité, entraînant le levier (1) dans le sens de sa position (1a) ouverte vers sa position (1f) fermée.

4. Dispositif selon les revendications 1 à 3, **caractérisé en ce que** les moyens de retenue comprennent une première butée (50) escamotable, en liaison pivot (L6) avec le bâti (0, 8), ayant dans une position saillante, un côté (CV) de blocage vers le ou les battants, le côté (CV) de blocage étant situé contre le levier (1) d'entraînement lorsque les moyens (1, 2, 61, 62) d'entraînement sont dans la position ouverte déterminée, la butée (50) se plaçant en position escamotée par rapport au levier (1), par un appui sur un côté (CP) saillant en pente.

5. Dispositif selon les revendications 1 à 4, **caractérisé en ce que** la commande de fermeture comprend une came (4), en liaison (L6) pivot avec le bâti (0, 8), située à la verticale du levier (1) d'entraînement, lorsque les moyens (1, 2, 61, 62) d'entraînement sont dans la position (1a, 2a) ouverte déterminée, et la came (4), lorsqu'elle est actionnée, soulevant le levier (1) d'entraînement au dessus de la première butée (50) escamotable se trouvant dans sa position saillante.

6. Dispositif selon les revendications 1 à 5, **caractérisé en ce que** le dispositif de contrôle comprend des moyens (5, L5) d'empêchement automatique du mouvement de retour des moyens (1, 2, 61, 62) d'entraînement, dans le mouvement des moyens (1, 2, 61, 62) d'entraînement entre la position (1a, 2a) ouverte déterminée vers la position (1f, 2f) fermée.

7. Dispositif selon les revendications 1 à 6, **caractérisé en ce que** les moyens (5, L5) d'empêchement du mouvement de retour comprennent une pluralité de butées (5) escamotables, de la deuxième à la dernière butée, situées après la première butée (50) sur le parcours du levier dans son mouvement de fermeture, présentant dans leur position saillante, un côté de blocage à l'opposé du ou des battants, la dernière butée (5) ayant son côté de blocage contre le levier en position fermée, les butées (5) se plaçant en position escamotée par rapport au levier (1), par un appui sur un côté (CP) saillant en pente.

8. Dispositif selon les revendications 1 à 7, **caractérisé en ce que** la commande (14, 13, 130) d'autorisation d'ouverture comprend un rail (14) de soulèvement escamotable, le rail étant situé à la verticale des butées (5) escamotables, de la deuxième à la dernière butée, le bord supérieur du rail de soulèvement, dans sa position haute, étant à une hauteur déterminée audessus des butées (5) escamotables dans leur position saillante.

9. Dispositif selon les revendications 1 à 8, **caractérisé en ce que** la commande (14, 13, 130) d'autorisation d'ouverture comprend une poignée (13) d'autorisation d'ouverture, la poignée (13) entraînant en rotation un tube (130) lié par une liaison (L7) pivot avec le bâti (8, 0), le rail (14) de soulèvement étant lié au tube (130) et excentré de l'axe de rotation du tube (130), une rotation entre deux positions déterminées, plaçant le rail (14) de soulèvement soit en position escamotée, soit en position haute, la poignée d'autorisation d'ouverture étant accessible en même temps qu'au moins un battant.

10. Dispositif selon les revendications 1 à 9, **caractérisé en ce que** la came (4) est activée à distance.

11. Dispositif selon les revendications 1 à 10, **caractérisé en ce que** la commande de fermeture comprend un lien (9) souple fixé à la came (4), débouchant par un tube (10) creux coudé ayant une ouverture basse dirigée vers le bas, débouchant à l'autre extrémité du tube (10) par une ouverture haute dirigée horizontalement, l'extrémité du lien (9) débouchant par l'ouverture basse du tube étant liée à la came (4), l'extrémité du lien (9) débouchant par l'ouverture haute du tube (10) étant tenue par un utilisateur et le tube (10) étant lié au bâti (0) par une liaison pivot d'axe vertical dont le centre passe par le centre de l'ouverture basse, un moyen de fixation permettant de bloquer la liaison pivot.

12. Dispositif selon les revendications 1 à 10, **caractérisé en ce que** la commande de fermeture comprend un lien (9) fixé par une première extrémité à la came (4), l'autre extrémité du lien (9) étant fixé à une tige liée à un piston coulissant dans un cylindre, le mouvement du piston dans le cylindre étant commandé électriquement à distance, l'activation de la commande provoquant une traction du lien (9) de façon à provoquer une rotation de la came (4) entraînant son activation.

13. Dispositif selon les revendications 1 à 10, **caractérisé en ce que** la commande de fermeture comprend un lien (9) fixé par une première extrémité à la came (4), l'autre extrémité du lien (9) étant liée à une bascule se trouvant dans le bas du passage (P), la bascule tirant sur le lien (9) afin d'activer la came (4), après que l'animal soit passé.

14. Dispositif selon une des revendications 1 à 13, **caractérisé en ce que** le dispositif de contrôle est adapté sur la porte (0, 3) d'une cage ou d'un couloir ou d'un enclos.

15. Dispositif selon la revendication 14, **caractérisé en ce que** une cage comporte une mangeoire accessible depuis l'intérieur de la cage.

## Claims

1. Device for controlling a door closing a passage (P) or the opening (P) of an enclosure for cattle, the door comprising a frame (0) connected to the passage or to the enclosure and at least one leaf (3), the leaf or leaves (3) permitting to close the door, each leaf (3) pivoting according to a vertical axis with respect to the frame (0), wherein it comprises at least :
- means for driving (1, 2, 61, 62) the leaf or leaves (3) in rotation, including at least one driving means (61, 62) tending to close the door automatically,
- means for retaining (50, L6) the driving means (1, 2, 61, 62) when the driving means (1, 2, 61, 62) are in a determined open position (1a, 2a) such that the leaf or leaves (3a) are in a specified open position,
- a closing control (4, 9, 10) acting on the retaining means (50), permitting to cancel for a specified time the retaining of the driving means (1, 2, 61, 62) and to carry out the closing,
- manual opening means (Ex1) acting on the driving means (1, 2, 61, 62) in order to place the driving means in the specified open position.

2. Device according to claim 1, wherein the driving means include a driving lever (1) connected in a hinging way to the leaves (3), the driving lever (1) including a large and a small lever arm on each side of a pivoting joint (L1) of the lever (1) with the frame (0, 7), the large lever arm (1) being connected by a flat support (Za) with the frame (0, 8) and sliding on the frame (0, 8) along a path between the specified open position (1a) and the closed position (1f).

3. Device according to claims 1 and 2, wherein the driving means (61, 62) include a gas piston sliding in a gas cylinder (62) and a driving rod (61) connected to the piston, the gas cylinder (62) being pivotally linked (L4) with the frame (0, 0), the driving rod (61) being pivotally linked (L3) with the end of the small lever arm (1) and permanently exercising pressure on the end, driving the lever (1) in the direction of its open position (1a) toward its closed position (1f).

4. Device according to claims 1 through 3, wherein the retaining means include a first retractable stop (50), linked pivotally (L6) with the frame (0, 8), having, in a protruding position, a blocking side (CV) toward the leaf or leaves, the blocking side (CV) being situated against the driving lever (1) when the driving means (1, 2, 61, 62) are in the specified open position, the stop (50) being placed in a retracted position with respect to the lever (1), by a support on a sloping protruding side (CP).

5. Device according to claims 1 through 4, wherein the closing control comprises a cam (4), linked pivotally (L6) with the frame (0, 8), located vertically with respect to the driving lever (1), when the driving means (1, 2, 61, 62) are in the specified open position (1a, 2a), and the cam (4), when it is activated, lifting the driving lever (1) above the first retractable stop (50) located in its protruding position.

6. Device according to claims 1 through 5, wherein the control device comprises means (5, L5) for automatically preventing the returning movement of the driving means (1, 2, 61, 62), during the movement of the driving means (1, 2, 61, 62) between the specified open position (1a, 2a) toward the closed position (1f, 2f).

7. Device according to claims 1 through 6, wherein the means (5, L5) for preventing the returning movement include a plurality of retractable stops (5), from the second to the last stop, located after the first stop (50) on the path of the lever during its closing movement, having, in their protruding position, a blocking side opposite the leaf or leaves, the last stop (5) having its blocking side against the lever in the closed position, the stops (5) being placed in a retracted position with respect to the lever (1), by a support on a sloping protruding side (CP).

8. Device according to claims 1 through 7, wherein the control (14, 13, 130) for allowing the opening comprises a retractable lifting rail (14), the rail being located vertically with respect to the retractable stops (5), from the second to the last stop, the upper edge of the lifting rail, in its upper position, being at a specified height above the retractable stops (5) in their protruding position.

9. Device according to claims 1 through 8, wherein the control (14, 13, 130) for allowing the opening comprises a handle (13) for allowing the opening, the handle (13) driving in rotation a tube (130) connected by a pivoting joint (L7) with the frame (8, 0), the lifting rail (14) being connected to the tube (130) and off-center with respect to the axis of rotation of the tube (130), a rotation between two specified positions placing the lifting rail (14) either in a retracted position, or in an upper position, the handle for allowing the opening being accessible simultaneously with at least one leaf.

10. Device according to claims 1 through 9, wherein the cam (4) is activated remotely.

11. Device according to claims 1 through 10, wherein the closing control comprises a flexible link (9) fixed to the cam (4), ending through a hollow elbow tube (10) having a lower opening facing downwards, ending at the other end of the tube (10) through an upper opening disposed horizontally, the end of the link (9) ending through the lower opening of the tube being connected to the cam (4), the end of the link (9) ending through the upper opening of the tube (10) being held by a user and the tube (10) being connected to the frame (0) by a pivoting joint with vertical axis the center of which passes through the center of the lower opening, a fixing means permitting to block the pivoting joint.

12. Device according to claims 1 through 10, wherein the closing control comprises a link (9) fixed by a first end to the cam (4), the other end of the link (9) being fixed to a rod connected to a piston sliding in a cylinder, the movement of the piston in the cylinder being remotely controlled electrically, the activation of the control bringing about a traction of the link (9) so as to effect a rotation of the cam (4) causing its activation.

13. Device according to claims 1 through 10, wherein the closing control comprises a link (9) fixed by a first end to the cam (4), the other end of the link (9) being connected to a bascule placed in the lower portion of the passage (P), the bascule pulling the link (9) so as to activate the cam (4), after the animal has passed.

14. Device according to one of claims 1 through 13, wherein the control device is adapted to the door (0, 3) of a cage or of a corridor or of an enclosure.

15. Device according to claim 14, wherein a cage comprises a feeder accessible from the inside of the cage.

## Patentansprüche

1. Einrichtung zur Kontrolle einer Tür, die einen Durchgang (P) oder die Öffnung (P) einer Einzäunung für Vieh schließt, wobei die Tür einen Rahmen (0), der mit dem Durchgang oder der Einzäunung verbunden ist, und wenigstens einen Flügel (3) umfasst, wobei der bzw. die Flügel (3) es erlauben, die Tür zu schließen, wobei jeder Flügel (3) gemäß einer zum Rahmen (0) vertikalen Achse schwenkt (0), **dadurch gekennzeichnet, dass** sie wenigstens Folgendes umfasst :
- Mittel (1, 2, 61, 62), um den bzw. die Flügel (3) in Drehung anzutreiben, umfassend wenigstens ein Motormittel (61, 62), das dazu neigt, die Tür automatisch zu schließen,
- Mittel (50, L6), um die Antriebmittel (1, 2, 61, 62) anzuhalten, wenn sich die Antriebmittel (1, 2, 61, 62) in einer bestimmten offenen Position (1a, 2a) befinden, so dass sich der bzw. die Flügel (3a) in einer spezifizierten offenen Position befinden,
- eine Schließvorrichtung (4, 9, 10), die auf die Rückhaltungsmittel (50) wirkt, die es erlaubt, das Anhalten der Antriebmittel (1, 2, 61, 62) während einer spezifizierten Zeit aufzuheben und die Schließung auszuführen,
- handbetätigte Öffnungsmittel (Ex1), die auf die Antriebmittel (1, 2, 61, 62) wirken, um die Antriebmittel in die spezifizierte offene Position zu bringen.

2. Einrichtung nach Anspruch 1, **dadurch gekennzeichnet, dass** die Antriebmittel einen Antriebhebel (1) umfassen, der gelenkig mit den Flügeln (3) verbunden ist, wobei der Antriebhebel (1) einen großen und einen kleinen Hebelarm an jeder Seite einer Schwenkverbindung (L1) des Hebels (1) mit dem Rahmen (0, 7) umfasst, wobei der große Hebelarm (1) über eine flache Stützfläche (Za) mit dem Rahmen (0, 8) verbunden ist und gemäß einem Laufweg zwischen der spezifizierten offenen Position (1a) und der geschlossenen Position (1f) auf dem Rahmen (0, 8) gleitet.

3. Einrichtung nach Ansprüchen 1 und 2, **dadurch gekennzeichnet, dass** die Antriebmittel (61, 62) einen Gaskolben umfasst, der in einem Gaszylinder (62) gleitet, und eine Treibstange (61), die mit dem Kolben verbunden ist, wobei der Gaszylinder (62) schwenkbar (L4) mit dem Rahmen (0, 0) verbunden ist, wobei die Treibstange (61) schwenkbar (L3) mit dem Ende des kleinen Hebelarmes (1) verbunden ist und ständig einen Druck auf dem Ende ausübt, so dass der Hebel (1) in Richtung seiner offenen Position (1a) in seine geschlossene Position (1f) geführt wird.

4. Einrichtung nach Ansprüchen 1 bis 3, **dadurch gekennzeichnet, dass** die Rückhaltemittel einen ersten einziehbaren Anschlag (50) umfasst, der gelenkig (L6) mit dem Rahmen (0, 8) verbunden ist und in seiner hervorstehenden Position eine zu dem bzw. den Flügeln gerichtete Sperrseite (CV) aufweist, wobei die Sperrseite (CV) sich gegen dem Antriebhebel (1) befindet, wenn sich die Antriebmittel (1, 2, 61, 62) in der spezifizierten offenen Position befinden, wobei sich der Anschlag (50) über ein Aufliegen auf einer geneigten hervorstehenden Seite (CP) in eine bezüglich des Hebels (1) eingezogenen Position stellt.

5. Einrichtung nach Ansprüchen 1 bis 4, **dadurch gekennzeichnet, dass** die Schließvorrichtung einen Nocken (4) umfasst, der schwenkbar (L6) mit dem Rahmen (0, 8) verbunden ist und sich vertikal zur Antriebhebel (1) befindet, wenn sich die Antriebmittel (1, 2, 61, 62) in der spezifizierten offenen Position (1a, 2a) befinden, und wobei der Nocken (4), wenn er betätigt wird, den Antriebhebel (1) über den sich in seiner hervorstehenden Position befindlichen, ersten einziehbaren Anschlag (50) hinaus aufhebt.

6. Einrichtung nach Ansprüchen 1 bis 5, **dadurch gekennzeichnet, dass** die Kontrolleinrichtung Mittel (5, L5) umfasst, um die Rückkehrbewegung der Antriebmittel (1, 2, 61, 62) während der Bewegung der Antriebmittel (1, 2, 61, 62) zwischen der spezifizierten offenen Position (1a, 2a) zu der geschlossenen Position (1f, 2f) automatisch zu verhindern.

7. Einrichtung nach Ansprüchen 1 bis 6, **dadurch gekennzeichnet, dass** die (5, L5), um die Rückkehrbewegung zu verhindern, eine Mehrheit von einziehbaren Anschlägen (5), von dem zweiten bis zum letzten Anschlag, umfassen, die sich nach dem ersten Anschlag (50) auf dem Laufweg des Hebels während seine Schließbewegung befinden und in ihrer hervorstehenden Position eine dem bzw. den Flügeln gegenüberliegende Sperrseite aufweisen, wobei der letzte Anschlag (5) seine Sperrseite gegen dem Hebeel in der geschlossenen Position hat, wobei sich die Anschläge (5) über ein Aufliegen auf einer geneigten hervorstehenden Seite (CP) in eine bezüglich des Hebels (1) eingezogenen Position stellen.

8. Einrichtung nach Ansprüchen 1 bis 7, **dadurch gekennzeichnet, dass** die Steuerung (14, 13, 130) zum Erlauben der Öffnung eine einziehbare Hebeschiene (14) umfasst, wobei sich die Schiene vertikal zu den einziehbaren Anschlägen (5), von dem zweiten bis zum letzten Anschlag, befindet, wobei sich der obere Rand der Hebeschiene in seiner hochgehobenen Position um eine spezifizierte Höhe oberhalb der einziehbaren Anschläge (5) in deren hervorstehenden Position befinden.

9. Einrichtung nach Ansprüchen 1 bis 8, **dadurch gekennzeichnet, dass** die Steuerung (14, 13, 130) zum Erlauben der Öffnung einen Griff (13) zum Erlauben der Öffnung umfasst, wobei der Griff (13) ein Rohr (130) in Drehung antreibt, das über eine Schwenkverbindung (L7) mit dem Rahmen (8, 0) verbunden ist, wobei die Hebeschiene (14) mit dem Rohr (130) verbunden und außermittig bezüglich der Drehachse des Rohres (130) ist, wobei eine Drehung zwischen zwei spezifizierten Positionen die Hebeschiene (14) entweder in eine eingezogene Position oder in eine hochgehobene Position bringt, wobei der Griff zum Erlauben der Öffnung gleichzeitig mit wenigstens einem Flügel zugänglich ist.

10. Einrichtung nach Ansprüchen 1 bis 9, **dadurch gekennzeichnet, dass** der Nocken (4) ferngesteuert wird.

11. Einrichtung nach Ansprüchen 1 bis 10, **dadurch gekennzeichnet, dass** die Schließvorrichtung einen am Nocken (4) befestigten, biegsamen Verbindungsteil (9) umfasst, der durch ein gebogenes Hohlrohr (10) endet, das eine nach unten gerichtete untere Öffnung hat, am anderen Ende des Rohres (10) durch eine horizontal gerichtete obere Öffnung endet, wobei das Ende des Verbindungsteils (9), das durch die untere Öffnung des Rohres endet mit dem Nocken (4) verbunden ist, wobei das Ende des Verbindungsteils (9), das durch die obere Öffnung des Rohres (10) endet, von einem Gebraucher gehalten wird und das Rohr (10) mit dem Rahmen (0) durch eine Schwenkverbindung mit vertikaler Achse verbunden ist, deren Mitte durch die Mitte der unteren Öffnung läuft, wobei ein Befestigungsmittel es erlaubt, die Schwenkverbindung zu sperren.

12. Einrichtung nach Ansprüchen 1 bis 10, **dadurch gekennzeichnet, dass** die Schließvorrichtung einen Verbindungsteil (9) umfasst, der an einem ersten Ende an dem Nocken (4) befestigt ist, wobei das andere Ende des Verbindungsteils (9) an einer Stange befestigt ist, die mit einem in einem Zylinder schiebenden Kolben verbunden ist, wobei die Bewegung des Kolbens in dem Zylinder elektrisch fernbedient wird, wobei die Ansteuerung der Steuerung eine Ziehung des Verbindungsteils (9) so bewirkt, dass eine Drehung des Nockens (4), die seine Ansteuerung zustandebringt, bewirkt wird.

13. Einrichtung nach Ansprüchen 1 bis 10, **dadurch gekennzeichnet, dass** die Schließvorrichtung einen Verbindungsteil (9) umfasst, der an einem ersten Ende an dem Nocken (4) befestigt ist, wobei das andere Ende des Verbindungsteils (9) an einer im unteren Teil des Durchgangs (P) angebrachten Kippvorrichtung verbunden ist, wobei die Kippvorrichtung den Verbindungsteil (9) so zieht, dass der Nocken (4) nach dem Durchgang des Tieres angesteurt wird.

14. Einrichtung nach Ansprüchen 1 bis 13, **dadurch gekennzeichnet, dass** die Schließvorrichtung der Tür (0, 3) eines Käfigs oder eines Korridors oder einer Einzäunung angepaßt ist.

15. Einrichtung nach Anspruch 14, **dadurch gekennzeichnet, dass** ein Käfig einen von innerhalb des Käfigs zugänglichen Futtertrog umfasst.
